# EUROPEAN PATENT SPECIFICATION

(11) **EP 3 379 208 B1**
(45) Date of publication and mention of the grant of the patent: **20.11.2019**
(21) Application number: 18163596.2
(22) Date of filing: 23.03.2018
(51) Int. Cl.: G01D 11/24, G01D 21/00

(54) **MAGNETIC FIELD COMMUNICATION SYSTEM AND METHOD**
MAGNETFELDKOMMUNIKATIONSSYSTEM UND -VERFAHREN
SYSTÈME DE COMMUNICATION À CHAMP MAGNÉTIQUE ET PROCÉDÉ

(30) Priority: 23.03.2017 KR 20170036997
(43) Date of publication of application: 26.09.2018
(73) Proprietor: Doosan Heavy Industries & Construction Co., Ltd., Seongsan-gu Changwon-si, Gyeongsangnam-do 51711 (KR)
(72) Inventor: CHOI, Jong Min, 17002 Gyeonggi-do (KR); PARK, Jeong Ho, 17090 Gyeonggi-do (KR); LEE, Seung Chul, 04427 Seoul (KR)
(74) Representative: Isarpatent

(56) References cited:
- EP-A1- 2 512 868
- JP-A- 2005 301 645
- US-A1- 2008 159 674

## Description

### BACKGROUND OF THE INVENTION

### Field of the Invention

Exemplary embodiments of the present invention relate to a magnetic field communication system and method, and more particularly, to a magnetic field communication system and method for communicating a signal indicating an internal state of metal equipment through a magnetic field and converting the signal communicating through the magnetic field to power to analyze the internal state of the metal equipment.

### Description of the Related Art

At present, in order to sense an internal state of metal equipment, there is a method of predicting the internal state of the metal equipment by sensing an external state of the metal equipment by arranging a sensor outside the metal equipment and then determining the external state of the metal equipment.

This method has a disadvantage in that it is difficult to accurately determine the internal state of the metal equipment and it is difficult to perform an accurate communication of a sensing value of the sensor even if the sensor is disposed inside the metal equipment. In addition, there is the inconvenience of periodically replacing a battery in order to continuously sense the state of the metal equipment. US 2008/0159674 A1 discloses an antifriction bearing, where a sensing unit including sensors attached to a cage of the bearing provides an average temperature to a transmitter, which sends signals reflecting the average temperatures to a receiver. JP 2005301645 A discloses a wireless sensor system transmitting a sensor signal such as a wheel rotation speed or temperature. EP 1 512 868 A1 discloses wireless automotive communication systems using magnetic signals.

### SUMMARY OF THE INVENTION

An object of the present invention is to provide a magnetic field communication system and method capable of collecting status information in an environment where accurate sensing is difficult, such as inside of metal equipment.

Another object of the present invention is to provide a magnetic field communication system and method for self-generating power using a magnetic field for checking an internal state of metal equipment without replacing a battery.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a magnetic field communication system includes a sensor unit disposed inside metal equipment and an adapter disposed outside the metal equipment. The sensor unit includes a sensor configured to detect an internal state of the metal equipment and to output a sensing signal indicative of the detected state, and an interface configured to convert the outputted sensing signal into a magnetic field signal and to transmit the magnetic field signal outside the metal equipment. The adapter is configured to receive the transmitted magnetic field signal from the sensor unit and to analyze the received magnetic field signal in order to determine a status of the internal state of the metal equipment.

The adapter may be further configured to generate power using the received magnetic field signal.

The interface and sensor may be disposed at separate locations inside the metal equipment.

The adapter includes a magnetic field receiver configured to receive the magnetic field signal and to output a value indicative of the received magnetic field signal; a controller configured to analyze the value from the magnetic field receiver and to determine the status of the internal state of the metal equipment based on the analyzed value; and a power supply unit configured to generate power using the magnetic field signal from the sensor unit and to store the generated power.

The controller may be further configured to monitor the power supply unit to detect a level of stored power present in the power supply unit and to control, based on the detected level, a charging of the power supply unit and the analyzing of the value from the magnetic field receiver. The power supply unit may be configured to be charged using the magnetic field signal from the sensor unit.

The controller may be further configured to control the power supply unit to be charged to at least a first predetermined level using the magnetic field signal, if the detected level drops below a second predetermined level.

The controller may be further configured to use the analyzed value from the magnetic field receiver in order to determine the status of the internal state of the metal equipment, if the detected level of the stored power is greater than or equal to the first predetermined level. In addition, the controller may be further configured to use the analyzed value from the magnetic field receiver in order to determine the status of the internal state of the metal equipment, if the detected level of the stored power remains greater than or equal to the second predetermined level after completion of the charging of the power supply unit. In addition, the controller may be further configured to defer or suspend analysis of the received magnetic field signal to determine the status of the internal state of the metal equipment while the power supply unit is charging.

The adapter may further include a magnetic field transmitter configured to communicate with a separate communication device using magnetic field communication to transmit information indicative of the determined status of the internal state of the metal equipment. The separate communication device may include the sensor unit receiving an analyzed magnetic field signal from the adapter.

In accordance with another aspect of the present invention, a magnetic field communication method includes detecting an internal state of metal equipment; outputting a sensing signal indicative of the detected state; converting the outputted sensing signal into a magnetic field signal; transmitting the magnetic field signal outside the metal equipment; receiving the transmitted magnetic field signal; and analyz ing the received magnetic field signal in order to determine a status of the internal state of the metal equipment.

The method further includes generating power using the received magnetic field signal. In addition, the method may further include outputting a value indicative of the received magnetic field signal; and analyzing the outputted value in order to determine the status of the internal state of the metal equipment.

According to the method, the internal state of the metal equipment is detected by a sensor unit disposed inside the metal equipment, and the transmitted magnetic field signal is received from the sensor unit by an adapter disposed outside the metal equipment. In addition, the method further includes generating power using the magnetic field signal from the sensor unit; and storing the generated power in the adapter.

Further according to the method, the adapter may be configured to be charged using the magnetic field signal from the sensor unit. In addition, the method may further include monitoring the stored power to detect a level of stored power present in the adapter; charging the adaptor based on the detected level; and determining the status of the internal state of the metal equipment based on the detected level.

The method may further include charging the adapter to at least a first predetermined level using the magnetic field signal, if the detected level drops below a second predetermined level.

The method may further include one of analyzing the received magnetic field signal to determine the status of the internal state of the metal equipment, if the detected level of the stored power is greater than or equal to the first predetermined level; or analyzing the received magnetic field signal to determine the status of the internal state of the metal equipment, if the detected level of the stored power remains greater than or equal to the second predetermined level after completion of the charging of the adapter.

The method may further include transmitting, from the adapter to a separate communication device, information indicative of the determined status of the internal state of the metal equipment.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram showing a configuration of a magnetic field communication system according to an embodiment of the present invention;
FIG. 2 is a block diagram showing a configuration of an interface according to the embodiment of the present invention;
FIG. 3 is a diagram showing the magnetic field communication according to the embodiment of the present invention; and
FIG. 4 is a flowchart showing a magnetic field communication method according to the embodiment of the present invention.

### DESCRIPTION OF SPECIFIC EMBODIMENTS

Hereinafter, exemplary embodiments of the present invention will be described in detail with reference to the accompanying drawings so that those skilled in the art may easily practice the present invention. However, the present invention may be implemented in various different forms and is not limited to the embodiments provided in the present description.

Portions unrelated to the description are omitted in order to obviously describe the present invention, and components that are the same as or similar to each other will be denoted by the same reference numerals throughout the specification.

Throughout the present specification, when any one part is referred to as being "connected to" another part, it means that any one part and another part are "directly connected to" each other or are "electrically connected to" each other with the other part interposed therebetween. In addition, unless explicitly described to the contrary, " comprising" any components will be understood to imply the inclusion of other elements rather than the exclusion of any other elements.

When it is described that any one part is "on" the other part, it may mean that the part is directly on the other part or any other part is interposed therebetween. On the contrary, when it is described that any one part is "directly on" the other part, there is no other part interposed therebetween.

Terms used throughout the specification, 'first', 'second', 'third', etc. may be used to describe various portions, components, zones, layers, and/or sections but are not limited thereto. These terms are used only to differentiate any portion, component, zone, layer, or section from other portions, components, zones, layers, or sections. Therefore, a first portion, component, zone, layer, or section which will be described below may be mentioned as a second portion, component, zone, layer, or section without departing from the scope of the present invention.

Terminologies used herein are to mention only a specific exemplary embodiment, and does not intend to limit the present invention. Singular forms used herein include plural forms as long as phrases do not clearly indicate an opposite meaning. A term "including" used in the present specification concretely indicates specific properties, regions, integer numbers, steps, operations, elements, and/or components, and is not to exclude presence or addition of other specific properties, regions, integer numbers, steps, operations, elements, components, and/or a group thereof.

The term expressing the relative space of "under", "over", and the like may be used to more easily describe the relationship between other portions of one portion which is illustrated in the drawings. The terms intend to include other meanings or operations of apparatuses which are being used along with the intended meaning in the drawings. For example, overturning the apparatus in the drawings, any portions described as being positioned "under" other portions will be described as being positioned "over" other portions. Therefore, the exemplified term "under" includes both of the up and down directions. An apparatus may rotate by 90° or may rotate at different angles and the term expressing a relative space is interpreted accordingly.

All terms including technical terms and scientific terms used herein have the same meaning as the meaning generally understood by those skilled in the art to which the present invention pertains unless defined otherwise. Terms defined in a generally used dictionary are additionally interpreted as having the meaning matched to the related art document and the currently disclosed contents and are not interpreted as ideal or formal meaning unless defined.

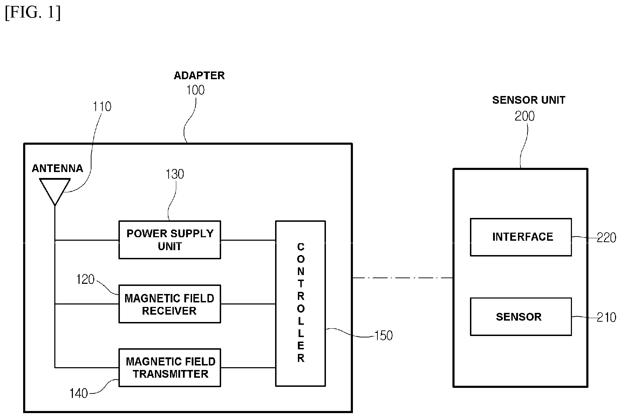

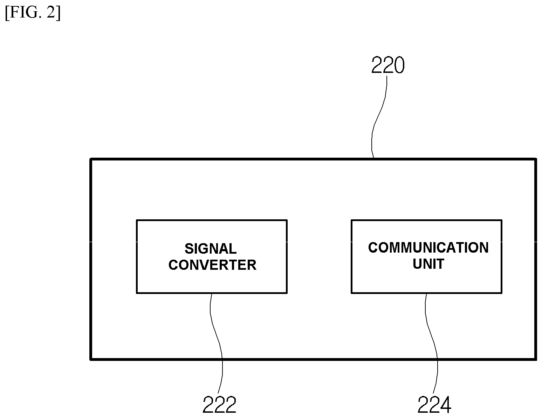

FIG. 1 shows a configuration of a magnetic field communication system according to an embodiment of the present invention, and FIG. 2 shows a configuration of the interface shown in FIG. 1.

Referring to FIGS. 1 and 2, a magnetic field communication system according to the embodiment may include an adapter 100 and a sensor unit 200. The adapter 100 may include an antenna 110, a magnetic field receiver 120, a power supply unit 130, a magnetic field transmitter 140, and a controller 150. The sensor unit 200 may include a sensor 210 and an interface 220. The sensor 210 may be realized in the form of a transducer.

The sensor 210 of the sensor unit 200 may be located in any of a variety environments. For example, the sensor 210 may be disposed within the interior of (inside) metal equipment, which may include apparatuses made primarily of metal. The sensor 210, or the metal equipment, may be situated underwater or underground, or in locations where physical access is impeded or obstructed or where communication using a general communication system is difficult. In the present embodiment, descriptions of and references to dispositions with respect to metal equipment should be understood to include dispositions with respect to the various environments as above. Thus situated, the sensor 210 can serve to measure the internal status and characteristics of the metal equipment, an underground or underwater facility, or other site.

Specifically, the sensor 210 detects the states of such characteristics as temperature, pressure, humidity, or degree of fracturing present inside the metal equipment and outputs a sensing signal indicative of the detected characteristic. Here, plural sensors 210 may be individually disposed to detect the temperature, the pressure, the humidity, the degree of fracturing, and the like, respectively.

The interface 220 of the sensor unit 200 may be disposed inside the metal equipment and may convert a sensing signal indicating the internal state of the metal equipment, as measured by the sensor 210, into a magnetic field signal. The interface 220 may then transmit the magnetic field signal outside the metal equipment, that is, from the inside to the outside of the metal equipment. In one example, the interface 220 may be disposed inside the metal equipment as component separate from the sensor 210, that is, at a location separate from that of the sensor 210. As another example, the interface 220 may be one component of the sensor 210, whereby the interface 220 and sensor 210 are formed into one, unified component.

The interface 220 may include a signal converter 222 and a communication unit 224. The signal converter 222 may convert the sensing signal indicating the internal state of the metal equipment, as measured by the sensor 210, into the magnetic field signal. The communication unit 224 may transmit the magnetic field signal outside the metal equipment.

The antenna 110 of the adapter 100 may receive the magnetic field signal transmitted from the interface 220 and transmit the received magnetic field signal to the magnetic field receiver 120. Here, in the magnetic field communication between the interface 220 and the adapter 100, the interface 220 and the adapter 100 may be set to have the same resonance frequency, so that the maximum power can be transmitted. Further, a distance between and relative positions of the interface 220 and the adapter 100 may be predetermined so that the maximum power can be transmitted.

The magnetic field receiver 120 of the adapter 100 may receive the magnetic field signal transmitted from the interface 220 through the antenna 110 and may provide the received magnetic field signal to the controller 150. In particular, the magnetic field receiver 120 may output to the controller 150 a value indicative of the received magnetic field signal, which reflects the detected internal state of the metal equipment.

The power supply unit 130 may generate power using the magnetic field signal supplied from the sensor unit 200 and may store the generated power. Specifically, the power supply unit 130 may include a coil (not shown) capable of generating a current when the magnetic field is applied and a capacitor (not shown) capable of storing the generated current. When receiving the magnetic field signal, the power supply unit 130 may store a current, which is generated by an electromagnetic induction phenomenon caused by the magnetic field, in the capacitor. Here, the capacitor may use the current stored in the capacitor as a power source, if current is no longer supplied from the coil. Accordingly, if the magnetic field signal is supplied from the sensor unit 200, the power supply unit 130 may be controlled by the controller 150 to store in the capacitor the current generated in the coil by the magnetic field signal, and if the magnetic field signal is not thus supplied and therefore the coil current is no longer be supplied to the capacitor, the power supply unit 130 may use the current stored in the capacitor as the power source.

The controller 150 may control the supply of the magnetic field signal received by the magnetic field receiver 120 to the power supply unit 130 and analyze the received magnetic field signal. Specifically, the controller 150 may control the supply the magnetic field signal based on a level of stored power. Here, the controller 150 may monitor the power supply unit 130, continuously or periodically, to detect a level of the power stored in the power supply unit 130, and accordingly, may control, based on the detected level, a charging of the power supply unit 130 and the analyzing of the value from the magnetic field receiver 120.

Under control of the controller 150, the magnetic field signal may be supplied to the power supply unit 130 until the power level of the power supply unit 130 becomes greater than or equal to a first predetermined level, when the power supply unit 130 stops being charged. The controller 150 may defer or suspend analysis of the magnetic field signal until the power level of the power supply unit 130 becomes greater than or equal to the first predetermined level. At this time, the power supply unit 130 may generate power using the magnetic field signal supplied from the sensor unit 200 and store the generated power. For example, the first predetermined level may be the power level at which the charging of the power supply unit 130 is completed, which be a level at or near the capacity of the power supply unit 130, or may be a power level sufficient to render an accurate analysis of the magnetic field signal, even if the charging of the power supply unit 130 is not completed.

If the level of the power charged in the power supply unit 130 is greater than or equal to the first predetermined level, the controller 150 may control the power supply unit 130 so that the magnetic field signal is no longer charging the power supply unit 130, and may then analyze the magnetic field signal to determine the internal state of the metal equipment. At this time, the controller 150 may receive power from the power supply unit 130 to analyze the internal state of the metal equipment.

In addition, the controller 150 may again control the supply of the magnetic field signal to the power supply unit 130 when, after the charging of the power supply unit 130 is completed, the power stored in the power supply unit 130 is reduced to a second predetermined level or less. At this time, the controller 150 may not use the magnetic field signals for the analysis of the internal state of the metal equipment and instead may cause the supply of the magnetic field signal to charge the power supply unit 130 to generate power. For example, the second predetermined level may be a power level in which the power stored in the power supply unit 130 is completely discharged, or may be a power level that is not enough to analyze the magnetic field signal, even if the power stored in the power supply unit 130 is not completely discharged.

Here, the controller 150 may control the supply the magnetic field signal so that the level of the power stored in the power supply unit 130 is greater than or equal to the first predetermined level. If the level of the power stored in the power supply unit 130 is greater than or equal to the first predetermined level, the controller 150 may use the stored power to analyze the magnetic field signal received by the magnetic field receiver 120. In addition, if the level of the power stored in the power supply unit 130 is reduced to the second predetermined level or less, the controller 150 may again control supply of the magnetic field signal to the power supply unit 130. That is, the controller 150 may determine the internal state of the metal equipment without using a separate power supply device. The controller 150 may provide the analysis result of the magnetic field signal to the magnetic field transmitter 140.

The magnetic field transmitter 140 may transmit the result of the magnetic field signal analyzed by the controller 150 to a separate communication device (not shown). In other words, the magnetic field transmitter 140 may communicate with the separate communication device by transmitting information indicative of the determined status of the internal state of the metal equipment. At this time, the magnetic field transmitter 140 transmits the analyzed magnetic field signal to the separate communication device using magnetic field communication, and the separate communication device may be the sensor unit 200 or a device other than the sensor unit 200.

The magnetic field communication system according to the embodiment of the present invention adopts a communication method using the magnetic field, and as a result, may perform communication between an inside and an outside of the metal equipment, in an environment where a general communication system is difficult to employ. In addition, the magnetic field communication system according to the embodiment of the present invention may not require the separate power supply device, and therefore may simplify the configuration of a communication system. As the configuration is simplified, the adapter 100 may be provided in an area having a narrow space.

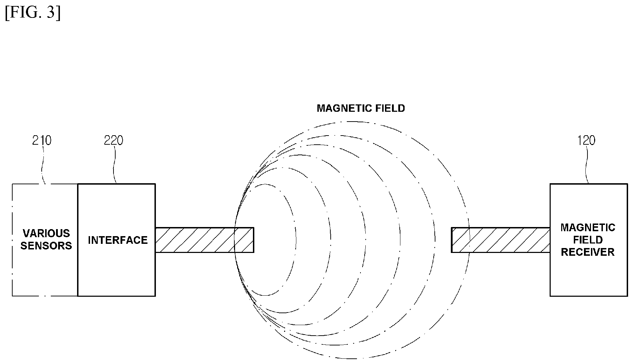

Referring to FIG. 3, showing the magnetic field communication of the present embodiment, the sensor 210 may measure the internal state of the metal equipment, and the interface 220 may convert the sensing signal indicating the internal state of the metal equipment being measured by the sensor 210 into a magnetic field signal. In addition, the interface 220 may transmit the magnetic field signal to the magnetic field receiver 120 through the magnetic field. The interface 220 may include a separate passive element for impedance matching with the adapter 100. Here, the antenna 110 may receive the magnetic field signal transmitted from the interface 220 and may transmit the received magnetic field signal to the magnetic field receiver 120. At this time, the antenna 110 may also transmit the received magnetic field signal to the power supply unit 130 of the adapter 100 for charging purposes.

In the magnetic field communication between the interface 220 and magnetic field receiver 120, the interface 220 and magnetic field receiver 120 are set to have the same resonance frequency, and the distance between and relative positions of the interface 220 and the magnetic field receiver 120 may be predetermined so that maximum power can be transmitted. That is, the reception performance of the magnetic field communication may be improved through impedance matching between the adapter 100 and the sensor unit 200.

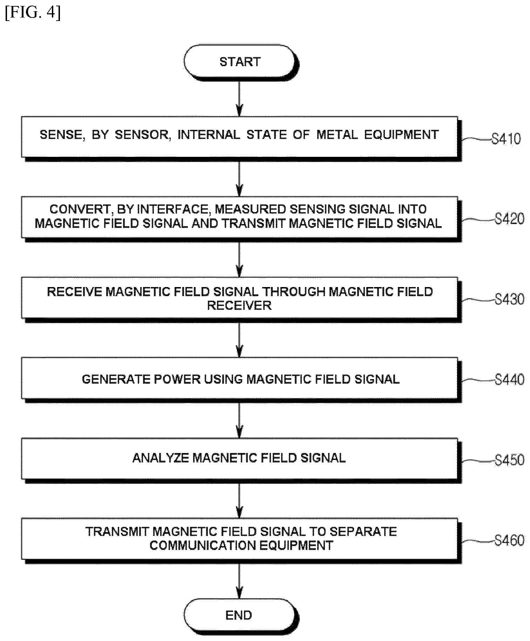

FIG. 4 shows a magnetic field communication method according to an embodiment of the present invention. A redundant description of overlapping contents will be omitted for the simplicity of explanation.

Referring to FIG. 4, the sensor 210 may sense the internal state of the metal equipment (S410). Specifically, the sensor 210 may sense the temperature, humidity, pressure, or degree of fracturing inside the metal equipment. Here, the sensor 210 may detect not only the state of the metal equipment, but also a state of an underground or underwater facility.

Next, the interface 220 may convert the sensing signal sensed by the sensor 210 into the magnetic field signal and transmit the magnetic field signal (S420). Specifically, the signal converter 222 converts the sensing signal sensed by the sensor 210 into the magnetic field signal, and the communication unit 224 may transmit the magnetic field signal outside the metal equipment. At this time, the communication unit 224 may transmit the magnetic field signal through the magnetic field.

Next, the magnetic field receiver 120 may receive the magnetic field signal transmitted from the interface 220 (S430). Here, the magnetic field receiver 120 may provide the received magnetic field signal to the controller 150.

Next, the power supply unit 130 may generate power by receiving the magnetic field signal from the sensor unit 200 (S440).

Specifically, when the power supply unit 130 is not charged, or not charged sufficiently, the controller 150 may control the supply of the magnetic field signal to the power supply unit 130, and thereby cause the magnetic field signal present in the adapter 100 to charge the power supply unit 130. The power supply unit 130 may generate power using the received magnetic field signal and store the generated power. Here, the power supply unit 130 stores a current generated by the electromagnetic induction phenomenon caused by the magnetic field, and the generated current may be stored in the capacitor.

Next, the controller 150 may analyze the magnetic field signal using an electric signal (current) stored in the power supply unit 130 as a power source (S450).

Specifically, if the level of the power stored in the power supply unit 130 is greater than or equal to the first predetermined level, the controller 150 may no longer cause the supply of the magnetic field signal to charge the power supply unit 130 and may instead analyze the magnetic field signal. Here, the controller 150 analyzes the magnetic field signal to determine the internal state of the metal equipment. As an example, it is possible to detect the temperature inside the metal equipment to determine whether the state of the metal equipment is normal or abnormal. Alternatively, it is possible to detect the pressure inside the metal equipment to determine whether the state of the metal equipment is normal or abnormal.

Here, if the level of the power stored in the power supply unit 130 which was greater than or equal to the first predetermined level is reduced to the second predetermined level or less, the controller 150 may apply the magnetic field signal so that the level of power stored in the power supply unit 130 is greater than or equal to the first predetermined level again.

Next, the magnetic field transmitter 140 may transmit the magnetic field signal analyzed by the controller 150 to a separate communication device or equipment (S460). Specifically, the magnetic field transmitter 140 may transmit the internal state of the metal equipment, which is determined through the magnetic field signal, to the separate communication device. At this time, the magnetic field transmitter 140 may transmit the magnetic field signal to the separate communication device using magnetic field communication, and the separate communication device may be the sensor unit 200.

According to the embodiment of the present invention, it is possible to realize the magnetic field communication system and method for communicating the signal indicating the internal state of the metal equipment through the magnetic field and converting the signal communicating through the magnetic field into power to analyze the internal state of the metal equipment.

The magnetic field communication system and method according to the embodiment of the present invention can collect status information on the inside of metal equipment, or in environments where it is difficult to sense the inside of metal equipment or the like.

In addition, it is possible to self-generate power using a magnetic field to check the internal state of the metal equipment without replacing the battery, and it is possible to simplify the configuration of the communication system since no separate battery is required.

In addition, other features and advantages of the present invention may be newly understood through the embodiments of the present invention.

Those skilled in the art will appreciate that various modifications and alterations may be made without departing from the present invention, which is solely defined by the following claims.

## Claims

1. A magnetic field communication system, comprising:
metal equipment; a sensor unit (200), disposed inside the metal equipment, including:
a sensor (210) configured to detect an internal state of the metal equipment and to output a sensing signal indicative of the detected state, and
an interface (220) configured to convert the outputted sensing signal into a magnetic field signal and to transmit the magnetic field signal outside the metal equipment; and
an adapter (100) disposed outside the metal equipment and configured to receive the transmitted magnetic field signal from the sensor unit (200) and to analyze the received magnetic field signal in order to determine a status of the internal state of the metal equipment,
**characterized in that**:
the adapter (100) includes:
a magnetic field receiver (120) configured to receive the magnetic field signal and to output a value indicative of the received magnetic field signal;
a controller (150) configured to analyze the value from the magnetic field receiver (120) and to determine the status of the internal state of the metal equipment based on the analyzed value; and
a power supply unit (130) configured to generate power using the magnetic field signal from the sensor unit (200) and to store the generated power.

2. The magnetic field communication system of claim 1, wherein the adapter (100) is further configured to generate power using the received magnetic field signal.

3. The magnetic field communication system of claim 1, wherein the controller (150) is further configured to monitor the power supply unit (130) to detect a level of stored power present in the power supply unit (130) and to control, based on the detected level, a charging of the power supply unit (130) and the analyzing of the value from the magnetic field receiver (120), and
wherein the power supply unit (130) is configured to be charged using the magnetic field signal from the sensor unit (200).

4. The magnetic field communication system of claim 3, wherein the controller (150) is further configured to control the power supply unit (130) to be charged to at least a first predetermined level using the magnetic field signal, if the detected level drops below a second predetermined level.

5. The magnetic field communication system of claim 4, wherein the controller (150) is further configured to use the analyzed value from the magnetic field receiver (120) in order to determine the status of the internal state of the metal equipment, if the detected level of the stored power is greater than or equal to the first predetermined level.

6. The magnetic field communication system of claim 4, wherein the controller (150) is further configured to use the analyzed value from the magnetic field receiver (120) in order to determine the status of the internal state of the metal equipment, if the detected level of the stored power remains greater than or equal to the second predetermined level after completion of the charging of the power supply unit (130).

7. The magnetic field communication system of claim 4, wherein the controller (150) is further configured to not analyze the received magnetic field signal to determine the status of the internal state of the metal equipment while the power supply unit (130) is charging.

8. A magnetic field communication method, comprising:
detecting (S410) an internal state of metal equipment;
outputting a sensing signal indicative of the detected state;
converting the outputted sensing signal into a magnetic field signal;
transmitting (S420) the magnetic field signal outside the metal equipment;
receiving (S430) the transmitted magnetic field signal; and
analyzing (S450) the received magnetic field signal in order to determine a status of the internal state of the metal equipment
**characterized in that**:
the internal state of the metal equipment is detected by a sensor unit (200) disposed inside the metal equipment, and the transmitted magnetic field signal is received from the sensor unit (200) by an adapter (100) disposed outside the metal equipment, the method further comprising:
generating power (S440) using the magnetic field signal from the sensor unit (200); and
storing the generated power in the adapter (100).

9. The magnetic field communication method of claim 8, further comprising:
generating power using the received magnetic field signal.

10. The magnetic field communication method of claim 8, further comprising:
outputting a value indicative of the received magnetic field signal; and
analyzing the outputted value in order to determine the status of the internal state of the metal equipment.

11. The magnetic field communication method of claim 8, wherein the adapter (100) is configured to be charged using the magnetic field signal from the sensor unit (200), the method further comprising:
monitoring the stored power to detect a level of stored power present in the adapter (100);
charging the adaptor based on the detected level;
determining the status of the internal state of the metal equipment based on the detected level; and
charging the adapter (100) to at least a first predetermined level using the magnetic field signal, if the detected level drops below a second predetermined level.

12. The magnetic field communication method of claim 11, further comprising:
analyzing the received magnetic field signal to determine the status of the internal state of the metal equipment, if the detected level of the stored power is greater than or equal to the first predetermined level,
wherein the received magnetic field signal is not analyzed to determine the status of the internal state of the metal equipment while the adapter (100) is charging.

13. The magnetic field communication method of claim 11, further comprising:
analyzing the received magnetic field signal to determine the status of the internal state of the metal equipment, if the detected level of the stored power remains greater than or equal to the second predetermined level after completion of the charging of the adapter (100),
wherein the received magnetic field signal is not analyzed to determine the status of the internal state of the metal equipment while the adapter (100) is charging.

## Patentansprüche

1. Magnetfeldkommunikationssystem, umfassend:
eine metallische Ausrüstung; wobei eine Sensoreinheit (200) im Inneren der metallischen Ausrüstung angeordnet ist, umfassend:
einen Sensor (210), der dafür ausgebildet ist, einen inneren Zustand der metallischen Ausrüstung zu detektieren und ein Abfühlsignal auszugeben, das den detektierten Zustand anzeigt, und
eine Schnittstelle (220), die dafür ausgebildet ist, das ausgegebene Abfühlsignal in ein Magnetfeldsignal umzuwandeln und das Magnetfeldsignal nach außerhalb der metallischen Ausrüstung zu senden; und
einen Adapter (100), der außerhalb der metallischen Ausrüstung angeordnet ist und dafür ausgebildet ist, das gesendete Magnetfeldsignal von der Sensoreinheit (200) zu empfangen und das empfangene Magnetfeldsignal zu analysieren, um einen Status des inneren Zustands der metallischen Ausrüstung zu bestimmen,
**dadurch gekennzeichnet, dass** der Adapter (100) Folgendes umfasst:
einen Magnetfeldempfänger (120), der dafür ausgebildet ist, das Magnetfeldsignal zu empfangen und einen Wert auszugeben, der das empfangene Magnetfeldsignal anzeigt;
einen Controller (150), der dafür ausgebildet ist, den Wert von dem Magnetfeldempfänger (120) zu analysieren und den Status des inneren Zustands der metallischen Ausrüstung auf der Basis des analysierten Wertes zu bestimmen; und
eine Stromversorgungseinheit (130), die dafür ausgebildet ist, Energie unter Verwendung des Magnetfeldsignals von der Sensoreinheit (200) zu generieren und die generierte Energie zu speichern.

2. Magnetfeldkommunikationssystem nach Anspruch 1, wobei der Adapter (100) des Weiteren dafür ausgebildet ist, Energie unter Verwendung des empfangenen Magnetfeldsignals zu generieren.

3. Magnetfeldkommunikationssystem nach Anspruch 1, wobei der Controller (150) des Weiteren dafür ausgebildet ist, die Stromversorgungseinheit (130) zu überwachen, um eine Pegel an gespeicherter Energie zu detektieren, die in der Stromversorgungseinheit (130) vorhanden ist, und auf der Basis des detektierten Pegels ein Laden der Stromversorgungseinheit (130) und das Analysieren des Wertes von dem Magnetfeldempfänger (120) zu steuern, und
wobei die Stromversorgungseinheit (130) dafür ausgebildet ist, unter Verwendung des Magnetfeldsignals von der Sensoreinheit (200) geladen zu werden.

4. Magnetfeldkommunikationssystem nach Anspruch 3, wobei der Controller (150) des Weiteren dafür ausgebildet ist, die Stromversorgungseinheit (130) so zu steuern, dass sie mindestens auf einen ersten zuvor festgelegten Pegel unter Verwendung des Magnetfeldsignals geladen wird, falls der detektierte Pegel unter einen zweiten zuvor festgelegten Pegel abfällt.

5. Magnetfeldkommunikationssystem nach Anspruch 4, wobei der Controller (150) des Weiteren dafür ausgebildet ist, den analysierten Wert von dem Magnetfeldempfänger (120) zu verwenden, um den Status des inneren Zustands der metallischen Ausrüstung zu bestimmen, falls der detektierte Pegel der gespeicherten Energie mindestens so hoch ist wie der erste zuvor festgelegte Pegel.

6. Magnetfeldkommunikationssystem nach Anspruch 4, wobei der Controller (150) des Weiteren dafür ausgebildet ist, den analysierten Wert von dem Magnetfeldempfänger (120) zu verwenden, um den Status des inneren Zustands der metallischen Ausrüstung zu bestimmen, falls der detektierte Pegel der gespeicherten Energie weiterhin mindestens so hoch bleibt wie der zweite zuvor festgelegte Pegel, nachdem das Laden der Stromversorgungseinheit (130) vollendet ist.

7. Magnetfeldkommunikationssystem nach Anspruch 4, wobei der Controller (150) des Weiteren dafür ausgebildet ist, das empfangene Magnetfeldsignal nicht zu analysieren, um den Status des inneren Zustands der metallischen Ausrüstung zu bestimmen, während die Stromversorgungseinheit (130) lädt.

8. Magnetfeldkommunikationsverfahren, umfassend:
Detektieren (S410) eines inneren Zustands einer metallischen Ausrüstung;
Ausgeben eines Abfühlsignals, das den detektierten Zustand anzeigt;
Umwandeln des ausgegebenen Abfühlsignals in ein Magnetfeldsignal;
Senden (S420) des Magnetfeldsignals nach außerhalb der metallischen Ausrüstung;
Empfangen (S430) des gesendeten Magnetfeldsignals; und
Analysieren (S450) des empfangenen Magnetfeldsignals, um einen Status des inneren Zustands der metallischen Ausrüstung zu bestimmen,
**dadurch gekennzeichnet, dass**:
der innere Zustand der metallischen Ausrüstung durch eine Sensoreinheit (200) detektiert wird, die im Inneren der metallischen Ausrüstung angeordnet ist, und das gesendete Magnetfeldsignal von der Sensoreinheit (200) durch einen Adapter (100) empfangen wird, der außerhalb der metallischen Ausrüstung angeordnet ist, wobei das Verfahren des Weiteren Folgendes umfasst:
Generieren von Energie (S440) unter Verwendung des Magnetfeldsignals von der Sensoreinheit (200); und
Speichern der generierten Energie in dem Adapter (100).

9. Magnetfeldkommunikationsverfahren nach Anspruch 8, des Weiteren umfassend:
Generieren von Energie unter Verwendung des empfangenen Magnetfeldsignals.

10. Magnetfeldkommunikationsverfahren nach Anspruch 8, des Weiteren umfassend:
Ausgeben eines Wertes, der das empfangene Magnetfeldsignal anzeigt; und
Analysieren des ausgegebenen Wertes, um den Status des inneren Zustands der metallischen Ausrüstung zu bestimmen.

11. Magnetfeldkommunikationsverfahren nach Anspruch 8, wobei der Adapter (100) dafür ausgebildet ist, unter Verwendung des Magnetfeldsignals von der Sensoreinheit (200) geladen zu werden, wobei das Verfahren des Weiteren Folgendes umfasst:
Überwachen der gespeicherten Energie, um einen Pegel der gespeicherten Energie zu detektieren, die in dem Adapter (100) vorhanden ist;
Laden des Adapters auf der Basis des detektierten Pegels;
Bestimmen des Status des inneren Zustands der metallischen Ausrüstung auf der Basis des detektierten Pegels; und
Laden des Adapters (100) auf mindestens einen ersten zuvor festgelegten Pegel unter Verwendung des Magnetfeldsignals, falls der detektierte Pegel unter einen zweiten zuvor festgelegten Pegel abfällt.

12. Magnetfeldkommunikationsverfahren nach Anspruch 11, des Weiteren umfassend:
Analysieren des empfangenen Magnetfeldsignals, um den Status des inneren Zustands der metallischen Ausrüstung zu bestimmen, falls der detektierte Pegel der gespeicherten Energie mindestens so hoch ist wie der erste zuvor festgelegte Pegel,
wobei das empfangene Magnetfeldsignal nicht analysiert wird, um den Status des inneren Zustands der metallischen Ausrüstung zu bestimmen, während der Adapter (100) lädt.

13. Magnetfeldkommunikationsverfahren nach Anspruch 11, des Weiteren umfassend:
Analysieren des empfangenen Magnetfeldsignals, um den Status des inneren Zustands der metallischen Ausrüstung zu bestimmen, falls der detektierte Pegel der gespeicherten Energie weiterhin mindestens so hoch bleibt wie der zweite zuvor festgelegte Pegel, nachdem das Laden des Adapters (100) vollendet ist,
wobei das empfangene Magnetfeldsignal nicht analysiert wird, um den Status des inneren Zustands der metallischen Ausrüstung zu bestimmen, während der Adapter (100) lädt.

## Revendications

1. Système de communication par champ magnétique, comprenant :
un équipement métallique;
une unité de détection (200), disposée à l'intérieur de l'équipement métallique, comprenant :
un capteur (210) configuré pour détecter un état interne de l'équipement métallique et pour délivrer un signal de détection indicatif de l'état détecté, et
une interface (220) configurée pour convertir le signal de détection délivré en un signal de champ magnétique et pour transmettre le signal de champ magnétique à l'extérieur de l'équipement métallique; et
un adaptateur (100) disposé à l'extérieur de l'équipement métallique et configuré pour recevoir le signal de champ magnétique transmis à partir de l'unité de détection (200) et pour analyser le signal de champ magnétique reçu afin de déterminer un statut de l'état interne de l'équipement métallique,
**caractérisé en ce que** :
l'adaptateur (100) comprend :
un récepteur de champ magnétique (120) configuré pour recevoir le signal de champ magnétique et pour délivrer une valeur indicative du signal de champ magnétique reçu;
un contrôleur (150) configuré pour analyser la valeur provenant du récepteur de champ magnétique (120) et pour déterminer le statut de l'état interne de l'équipement métallique sur la base de la valeur analysée; et
une unité d'alimentation (130) configurée pour générer de l'énergie en utilisant le signal de champ magnétique provenant de l'unité de détection (200) et pour stocker l'énergie générée.

2. Système de communication par champ magnétique selon la revendication 1, dans lequel l'adaptateur (100) est en outre configuré pour générer de l'énergie en utilisant le signal de champ magnétique reçu.

3. Système de communication par champ magnétique selon la revendication 1, dans lequel le contrôleur (150) est en outre configuré pour surveiller l'unité d'alimentation (130) pour détecter un niveau d'énergie stockée présente dans l'unité d'alimentation (130) et pour commander, sur la base du niveau détecté, une charge de l'unité d'alimentation (130) et l'analyse de la valeur provenant du récepteur de champ magnétique (120), et
dans lequel l'unité d'alimentation (130) est configurée pour être chargée en utilisant le signal de champ magnétique provenant de l'unité de détection (200).

4. Système de communication par champ magnétique selon la revendication 3, dans lequel le contrôleur (150) est en outre configuré pour commander l'unité d'alimentation (130) pour qu'elle soit chargée à au moins un premier niveau prédéterminé en utilisant le signal de champ magnétique, si le niveau détecté tombe en dessous d'un second niveau prédéterminé.

5. Système de communication par champ magnétique selon la revendication 4, dans lequel le contrôleur (150) est en outre configuré pour utiliser la valeur analysée provenant du récepteur de champ magnétique (120) afin de déterminer le statut de l'état interne de l'équipement métallique, si le niveau détecté de l'énergie stockée est supérieur ou égal au premier niveau prédéterminé.

6. Système de communication par champ magnétique selon la revendication 4, dans lequel le contrôleur (150) est en outre configuré pour utiliser la valeur analysée provenant du récepteur de champ magnétique (120) afin de déterminer le statut de l'état interne de l'équipement métallique, si le niveau détecté de l'énergie stockée reste supérieur ou égal au second niveau prédéterminé après l'achèvement de la charge de l'unité d'alimentation (130).

7. Système de communication par champ magnétique selon la revendication 4, dans lequel le contrôleur (150) est en outre configuré pour ne pas analyser le signal de champ magnétique reçu pour déterminer le statut de l'état interne de l'équipement métallique pendant que l'unité d'alimentation (130) est en charge.

8. Procédé de communication par champ magnétique, comprenant de :
détecter (S410) un état interne d'un équipement métallique;
délivrer un signal de détection indicatif de l'état détecté;
convertir le signal de détection délivré en un signal de champ magnétique;
transmettre (S420) le signal de champ magnétique à l'extérieur de l'équipement métallique;
recevoir (S430) le signal de champ magnétique transmis; et
analyser (S450) le signal de champ magnétique reçu afin de déterminer un statut de l'état interne de l'équipement métallique,
**caractérisé en ce que** :
l'état interne de l'équipement métallique est détecté par une unité de détection (200) disposée à l'intérieur de l'équipement métallique et le signal de champ magnétique transmis est reçu à partir de l'unité de détection (200) par un adaptateur (100) disposé à l'extérieur de l'équipement métallique, procédé comprenant en outre de :
générer de l'énergie (S440) en utilisant le signal de champ magnétique provenant de l'unité de détection (200); et
stocker l'énergie générée dans l'adaptateur (100).

9. Procédé de communication par champ magnétique selon la revendication 8, comprenant en outre de :
générer de l'énergie en utilisant le signal de champ magnétique reçu.

10. Procédé de communication par champ magnétique selon la revendication 8, comprenant en outre de :
délivrer une valeur indicative du signal de champ magnétique reçu; et
analyser la valeur délivrée afin de déterminer le statut de l'état interne de l'équipement métallique.

11. Procédé de communication par champ magnétique selon la revendication 8, dans lequel l'adaptateur (100) est configuré pour être chargé en utilisant le signal de champ magnétique provenant de l'unité de détection (200), le procédé comprenant en outre de :
surveiller l'énergie stockée pour détecter un niveau d'énergie stockée présente dans l'adaptateur (100);
charger l'adaptateur en fonction du niveau détecté;
déterminer le statut de l'état interne de l'équipement métallique en fonction du niveau détecté; et
charger l'adaptateur (100) à au moins un premier niveau prédéterminé en utilisant le signal de champ magnétique, si le niveau détecté tombe en dessous d'un second niveau prédéterminé.

12. Procédé de communication par champ magnétique selon la revendication 11, comprenant en outre de :
analyser le signal de champ magnétique reçu pour déterminer le statut de l'état interne de l'équipement métallique, si le niveau détecté de l'énergie stockée est supérieur ou égal au premier niveau prédéterminé,
dans lequel le signal de champ magnétique reçu n'est pas analysé pour déterminer le statut de l'état interne de l'équipement métallique pendant le chargement de l'adaptateur (100).

13. Procédé de communication par champ magnétique selon la revendication 11, comprenant en outre de :
analyser le signal de champ magnétique reçu pour déterminer le statut de l'état interne de l'équipement métallique, si le niveau détecté de l'énergie stockée reste supérieur ou égal au second niveau prédéterminé après l'achèvement du chargement de l'adaptateur (100),
dans lequel le signal de champ magnétique reçu n'est pas analysé pour déterminer le statut de l'état interne de l'équipement métallique pendant le chargement de l'adaptateur (100).
